# EUROPEAN PATENT APPLICATION

(11) **EP 4 674 766 A1**
(43) Date of publication of application: **07.01.2026**
(21) Application number: 24186613.6
(22) Date of filing: 04.07.2024
(51) Int. Cl.: B64F 5/40, G06Q 10/20, B64F 5/60

(54) **INTERACTIVE MANAGEMENT DEVICE AND METHOD FOR MANAGING MAINTENANCE DEVICES FOR AN AIRCRAFT**

(71) Applicant: AIRBUS Operations GmbH, 21129 Hamburg (DE)
(72) Inventor: Höhn, Daniel, 21129 Hamburg (DE); Otto, Timm, 21129 Hamburg (DE); Ebeling, Leon, 21129 Hamburg (DE)

(57) **Abstract**

The present invention relates to an interactive management device (1) for managing maintenance devices (15) for an aircraft (100) comprising: a computer unit (2) with computer program (3) and at least one interactive interface (4) configured to connect external technical participants with the computer unit (2) with computer program (3) wherein the external technical participants comprise at least one participant from a group of maintenance devices (15), in particular from a group of ground support equipment, for an aircraft (100). In addition, a method (M) for managing maintenance devices for an aircraft (100) is disclosed.

## Description

### TECHNICAL FIELD OF THE INVENTION

The present invention pertains to an interactive management device and a method for managing maintenance devices for an aircraft.

### TECHNICAL BACKGROUND

The operation of an airport and the operational use of aircraft involve various activities that must be carried out while the aircraft are on the ground. In particular, numerous maintenance activities on the aircraft must be organized and carried out. It is not only important to make optimal use of the limited time on the ground, but above all to coordinate the respective activities in a sensible way.

Currently, stand-alone systems are often used for individual activities, so that planning and implementing the individual activities usually requires separate effort. A comprehensive planning and implementation of all activities can therefore usually only be carried out with additional time expenditure, which in turn significantly increases the costs involved.

### SUMMARY OF THE INVENTION

Against this background, it is an object of the present invention to provide a technical solution which supports efficient planning and execution of activities, especially maintenance activities, around an aircraft on the ground.

This object is achieved by an interactive management device for managing maintenance devices having the features of claim 1 and a method for managing maintenance devices having the features of claim 12.

According to the invention, an interactive management device for managing maintenance devices for an aircraft comprises a computer unit with computer program and at least one interactive interface configured to connect external technical participants with the computer unit with computer program wherein the external technical participants comprise at least one participant from a group of maintenance devices, in particular from a group of ground support equipment, for an aircraft.

Further according to the invention, a method for managing maintenance devices for an aircraft comprises the following steps: providing and activating an interactive management device according to the invention, connecting external technical participants to the interactive management device, wherein the external technical participants comprise at least one participant from a group of maintenance devices, in particular from a group of ground support equipment, for an aircraft.

Thus, one idea of the present invention is to provide an interactive management device which serves as a centralized unit so that as many independent external technical participants as possible can be organized around the aircraft currently stationed on the ground via one and the same device. External technical participants may also include aircraft and other interactive management devices.

The great advantage of the present invention is that, by means of this approach, it is now possible for the first time to plan and carry out a coordinated routine of activities around the aircraft currently stationed on the ground without having to incur the high costs that would otherwise be incurred due to the managing of the separate units.

According to an embodiment of the invention, components of the interactive management device are stored in a mobile housing device of the interactive management device and wherein the mobile housing device comprises at least one replaceable energy storage system.

In this way, it is possible to use the device according to the invention in a mobile manner, independent of an immediate infrastructure. For example, the device according to the invention can be used directly on the ground in the immediate vicinity of the aircraft, so that the respective external technical participants can be conveniently and safely connected to the device.

An energy supply can be ensured with the replaceable energy storage system. In this context, the term "*replaceable*" means that the replaceable energy storage system can be temporarily separated from the mobile housing device and thus moved on its own. In this way, for example, the actual energy sources of this replaceable energy storage system can be exchanged in order to be recharged at another location. The replaceable energy storage system can also include a corresponding infrastructure of its own, so that charging processes are also conceivable when the actual energy sources remain in the mobile housing device.

According to another embodiment of the invention, the mobile housing device comprises at least one solar module for charging the at least one replaceable energy storage system.

This means that longer periods of operation can be comfortably completed, particularly during longer operations on the ground in a direct vicinity of the aircraft.

According to another embodiment of the invention, components of the interactive management device are stored in an integration set device of the interactive management device configured to be functional integrated into a larger technical device, particularly a cart device for transporting ground support equipment for the aircraft, and wherein the integration set device comprises at least one replaceable energy storage system.

In this way, it can be advantageously possible to place the interactive management device in the immediate vicinity of the external technical participants, so that a particularly simple and reliable connection between these units can be realized.

This also makes it possible to conveniently transport the interactive management device to its actual location, for example in the vicinity of the area where the aircraft is stationed on the ground, since the mobility of the inventive interactive management device can be ensured at the same time as the larger technical device is transported.

In some embodiments of the invention, components of the interactive management device are stored in a wall-mountable stationary box device of the interactive management device configured to be connected to an external power supply.

A stationary placement of the interactive management device offers the advantage that a permanent power supply can be very easily realized by means of appropriately laid cables.

According to another embodiment of the invention, the at least one interactive interface comprises connectivity means for wired or wireless connectivity options so that an interactive connection between the external technical participants with the computer unit can be realized.

Wireless connectivity options can offer the advantage that the interactive management device according to the invention can be used immediately, since the otherwise necessary cabling with the external technical participants does not have to be carried out first.

According to another embodiment of the invention, the wireless connectivity means are selected from: BLE, LoRaWAN, WLAN, 5G.

The respective options can advantageously be provided depending on a particular application scenario. It is also conceivable that several of the options mentioned are provided.

According to another embodiment of the invention, the computer unit with computer program is configured to connect the connected external technical participants to an external network system.

The interactive management device according to the invention can thus be expanded as required with additional functions which are integrated in the external network system or are provided there. The interactive management device can also be used advantageously as a user-defined controllable connection unit between the external technical participants and the external network system.

According to another embodiment of the invention, the interactive management device comprises a card system with at least one card reader and at least one computer card with a functional program that can be inserted into the at least one card reader wherein the card system is configured to activate at least one function of the interactive management device.

Such a card system with at least one card reader and at least one computer card can be intended for all authorization and authorization issues. The at least one computer card with a functional program can be designed to provide the respective radio connections of the interactive management device. In this way, the external technical participants can also be monitored with regard to their connectivity with the interactive management device.

According to another embodiment of the invention, the interactive management device is configured to provide an application program of the interactive management device to external technical devices, in particular mobile devices, so that by means of this application program at least one function of the interactive management device can be controlled.

Using the application program, further information can be exchanged between the interactive management device and the external technical devices. The interactive management device can also be expanded as required with mobile devices, for example with respective touchscreen elements or the like, to carry out control and monitoring activities, resulting in a particularly user-friendly interactive management device.

According to another embodiment of the invention, the interactive management device comprises positioning calculations means so that a relative distance between the interactive management device and the respective external technical participants can be determined.

In this way, the collected position data of external technical participants who are to be connected or who are already connected can be used to organize or carry out activities or the like that are to be organized.

According to another embodiment of the invention, the connecting of the external technical participants to the interactive management device within the inventive method depends on a user-defined adjustable spatial proximity of the external technical participants to the interactive management device.

This variant of the method according to the invention can offer the advantage of letting the user ultimately decide which spatial proximity must exist for a successful connection between the interactive management device and the respective external technical participants, so that only connections relevant to the respective user scenario will be established.

According to another embodiment of the invention, the method comprises further the step of: providing an application program of the interactive management device to external technical devices, in particular mobile devices, so that by means of this application program at least one function of the interactive management device can be controlled.

Using the application program, further information can be exchanged between the interactive management device and the external technical devices. The interactive management device can also be expanded as required with mobile devices, for example with respective touchscreen elements or the like, to carry out control and monitoring activities, resulting in a particularly user-friendly interactive management device.

According to another embodiment of the invention, the method comprises further the following steps: collecting information from the connected external technical participants using the interactive management device, sending the information to an external network device using the interactive management device, proceeding the information using a computer program stored on the external network device, receiving the proceeded information from the external network device using the interactive management device and providing the processed information to at least one external technical participant using the interactive management device.

A reliable and rapid coordination of the respective external technical participants with regard to different activities surrounding a parked aircraft on the ground, for example various maintenance activities, can thus be ensured, so that cost savings can be achieved by means of the method according to the invention.

### BRIEF SUMMARY OF THE DRAWINGS

The present invention is explained in more detail below with reference to the embodiments shown in the schematic figures:
- Fig. 1: shows a schematic view of an interactive management device according to an embodiment of the invention;
- Fig. 2: shows a schematic view of a user scenario of an interactive management device according to another embodiment of the invention;
- Fig. 3: shows another schematic view of another user scenario of an interactive management device according to another embodiment of the invention;
- Fig. 4: schematically depicts a flow diagram of a method for managing ground support equipment for an aircraft using the inventive interactive management device of Fig. 1.

In the figures of the drawing, elements, features and components which are identical, functionally identical and of identical action are denoted in each case by the same reference designations unless stated otherwise.

### DESCRIPTION OF EXEMPLARY EMBODIMENTS

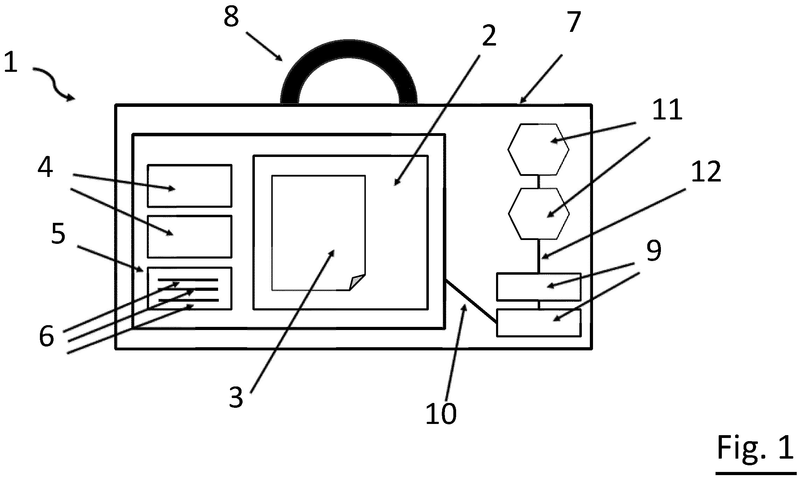

Fig. 1 shows a schematic view of an interactive management device 1 according to an embodiment of the invention. The demonstrated interactive management device 1 comprises a computer unit 2 with computer program 3 and two interactive interfaces 4 configured to connect external technical participants (not shown) with the computer unit 2 with computer program 3 wherein the external technical participants comprise at least one participant from a group of ground support equipment for an aircraft. The group of ground support equipment for an aircraft can comprise, for example, all kinds of maintenance devices for aircraft.

In an embodiment variant not shown in detail, it is conceivable that only one interactive interface 4 is provided. It is also conceivable that more than two interactive interfaces 4, for example three or more, are provided.

The term "*interactive*" in this context means that the interactive interfaces 4 are designed to both send and receive information. In this respect, the interactive interfaces 4 can comprise, for example, antennas and receiving units or the like.

In general, the respective interactive interfaces 4 can each comprise connectivity means (not shown in detail) for wired or wireless connectivity options so that an interactive connection between the external technical participants with the computer unit 2 can be realized. This wireless connectivity means can be selected from BLE, LoRaWAN, WLAN, 5G.

In this context, it is conceivable that an interactive interface only has one of the previously mentioned options, for example only BLE. It is equally conceivable that the respective interactive interfaces 4 each comprise at least two of the aforementioned connectivity options, whereby either a variant with a user-defined switching device can be provided or an automated switching device can be provided which makes the necessary settings as required.

In all of the previously mentioned variants of the interactive management device 1, it is also conceivable that the respective interactive interfaces 4 are designed to enable a connection of the interactive management device 1 to an external network system. In this respect, the interactive management device 1 thus serves as a technical unit with the aid of which respective external technical participants, for example respective ground support equipment units, can be connected to this external network system.

In this way, a large number of respective external technical participants, for example respective ground support equipment units, can be coordinated in the external network system. For example, respective activities of the external technical participants, for example respective maintenance activities on the aircraft, can be coordinated and/or monitored. The activities carried out or taken into account can also be documented, for example by saving them as a data set. The data can be stored temporarily on the device or at least partially stored directly in the system. Depending on a successful connection, this can be user-defined or at least partially automated.

In relation to the image level, a card system 5 of the interactive management device 1 is shown below the interactive interfaces 4. The card system 5 comprises three card readers 6, which are shown schematically in Fig. 1 as respective card insertion slots for computer cards (not shown) with respective functional programs of the card system 5. In other words, it can be provided that each computer card comprises an individual functional program, so that a specific inserted computer card in the card system 5 causes a specific routine or function or the like.

The computer cards (not shown) with the respective functional programs of the card system 5 can, for example, be designed to authorize respective corresponding connectivity means for respective connections. It is also conceivable that the computer cards (not shown) with the respective functional programs are designed to authorize respective external technical participants to establish a connection with the interactive management device.

In other words the interactive management device 1 is shown with the card system 5 with three card readers 6. Each card reader 6 is designed to accommodate a corresponding computer card (not shown) with the respective functional program of the card system 5 wherein the card system 5 is configured to activate at least one function of the interactive management device 1.

In an embodiment variant not shown in more detail, it is also conceivable that such a card system 5 is at least partially provided or implemented as a virtual component in the computer program 3 of the interactive management device 1.

The computer cards (not shown) to be inserted into the card system 5 via the card readers 6 can be provided, for example, in an Eurocard format (160 x 100 mm) and can furthermore be provided to run a container-based software or the like. Different computer cards can be provided so that advanced functionality, like lora/BLE transmission, storage, cellular, wired connection and the like can be provided.

In other variants not shown in detail, it is also conceivable that the interactive management device 1 is configured to provide an application program of the interactive management device 1 (not shown) to external technical devices, in particular mobile devices, so that by means of this application program at least one function of the interactive management device 1 can be controlled.

In Fig. 1, the previously mentioned components, namely the computer unit 2 with computer program 3, the interactive interfaces 4 and the card system 5, are shown arranged or housed in a mobile housing device 7 of the interactive management device 1.

The mobile housing device 7 is shown in the shape of a suitcase. A carrying aid 8 in the form of a schematically illustrated handle is shown on one long side of the mobile housing device 7 with respect to the image plane. The external dimensions of the mobile housing device 7 can, for example, be designed or dimensioned such that the entire interactive management device 1 can be comfortably carried by one person alone.

Instead of the carrying aid 8 shown, alternative carrying concepts can be provided. For example, carrying strap systems similar to a backpack or the like. The mobile housing device 7 can also have a robust and thus essentially impact-resistant outer skin, which can also be weatherproof, so that the contents (components) are particularly well protected from any external influences.

The mobile housing device 7 is also shown with two replaceable energy storage systems 9 which are coupled to the previously mentioned components via a first connecting line 10. This coupling is shown schematically once as a representative example.

However, it is conceivable that respective components are provided coupled with respective replaceable energy storage systems 9. For example, it is conceivable that the computer unit 2 is provided coupled with an exclusive replaceable energy storage system 9 alone, so that a particularly secure energy supply to the main component can be guaranteed.

In this respect, it is conceivable in an embodiment not shown in detail that the replaceable energy storage system 9 is configured to provide functionality according to the hot swap principles.

In this context, the hot swapping principle is understood to mean any technology that must be present so that components (for example, energy sources or the like from the energy storage system 9) can be replaced or added to a computer system or the like without stopping, shutting down or restarting the system.

The mobile housing device 7 is shown furthermore with two solar modules 11, which are shown arranged on the outside of the mobile housing device 7. The two solar modules 11 have an essentially honeycomb-shaped outer contour. Other shapes are conceivable here. It is also conceivable that the solar modules 11 are provided individually but connected to one another. It is also conceivable that the solar modules 11 cover a larger outer area of the mobile housing device 7 or are arranged there.

In each of these variants, the solar modules 11 are designed to charge the respective replaceable energy storage systems 9. This functional relationship is schematically symbolized by a second connecting line 12.

In other words, the interactive management device 1 is shown with the belonging mobile housing device 7 which comprises at least one solar module 11 for charging the at least one replaceable energy storage system 9.

The interactive management device 1 can also be named as SMAP (smart maintenance access point) because it allows different ground support equipment units to connect to higher-level units (external network units). The SMAP will secure the connection between the ground support equipment 15 or other assets and provide thereby a cloud solution. It is capable of being adapted to several protocols and connection standards. In case of no connectivity the connection will only be established between the ground support equipment 15 and the SMAP. When connectivity is established, the data will be transferred.

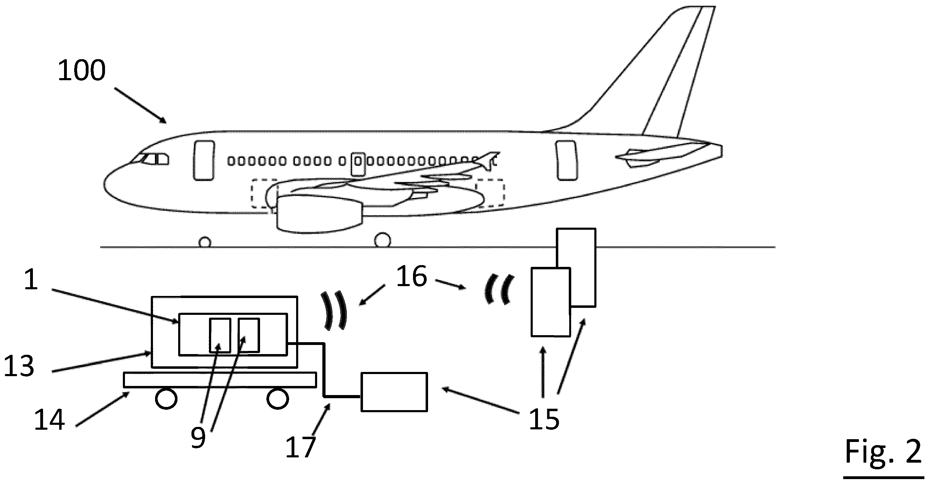

Fig. 2 shows a schematic view of an user scenario of an interactive management device 1 according to another embodiment of the invention.

The interactive management device 1 (or its components, for example similar or identical to those shown in Fig. 1) is stored in an integration set device 13 of the interactive management device 1. The other components can be similar to those shown in Fig. 1, although they are not explicitly shown in Fig. 2 for reasons of clarity. This is also not a true-to-scale illustration, but merely a schematic representation for the purpose of explaining possible embodiments of the present invention.

This combined unit is shown right next to a parked aircraft 100. The integration set device 13 is shown arranged into a larger technical device 14, which has the form of a cart device for transporting ground support equipment for the aircraft 100.

In other words, components of the interactive management device 1 are stored in the integration set device 13 of the interactive management device 1 which is configured to be functional integrated into the larger technical device 14, particularly a cart device for transporting ground support equipment for the aircraft 100. The integration set device 13 is furthermore shown with two replaceable energy storage systems 9.

The shown interactive management device 1 comprises furthermore connectivity means (not shown in detail) for connecting the interactive management device 1 with schematically shown ground support equipment 15 for the aircraft 100. This possible radio connection between the interactive management device 1 and the ground support equipment 15 is illustrated in Fig. 2 by means of radio wave symbols 16. Alternatively, a coupling can also be provided using the third connecting line 17 shown.

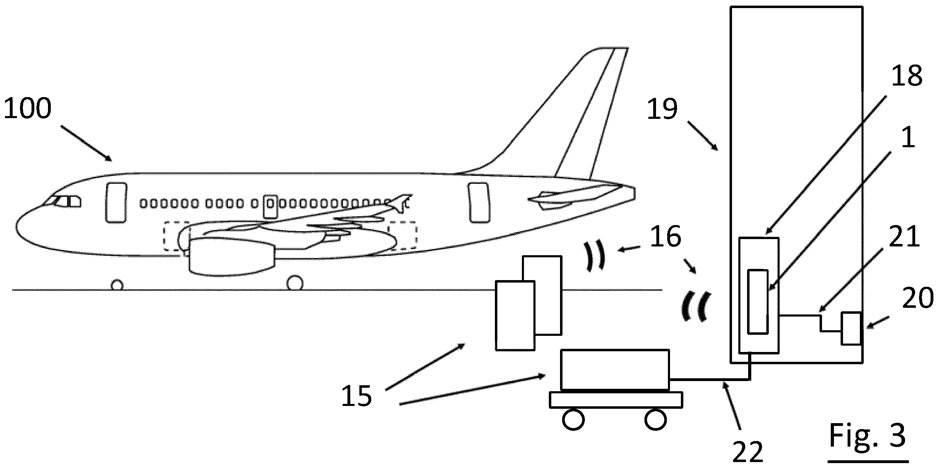

Fig. 3 shows another schematic view of another user scenario of an interactive management device 1 according to another embodiment of the invention.

The interactive management device 1 (or its components, for example similar or identical to those shown in Fig. 1) is stored in a wall-mountable stationary box 18 of the interactive management device 1. The wall-mountable stationary box 18 is stored in an aircraft hangar 19 and coupled to an external power supply 20 via a fourth connecting line 21.

The shown interactive management device 1 comprises furthermore connectivity means (not shown in detail) for connecting the interactive management device 1 with schematically shown ground support equipment 15 for the aircraft 100. This possible radio connection between the interactive management device 1 and the ground support equipment 15 is illustrated in Fig. 3 by means of radio wave symbols 16. Alternatively, a coupling can also be provided using the fifth connecting line 22 shown.

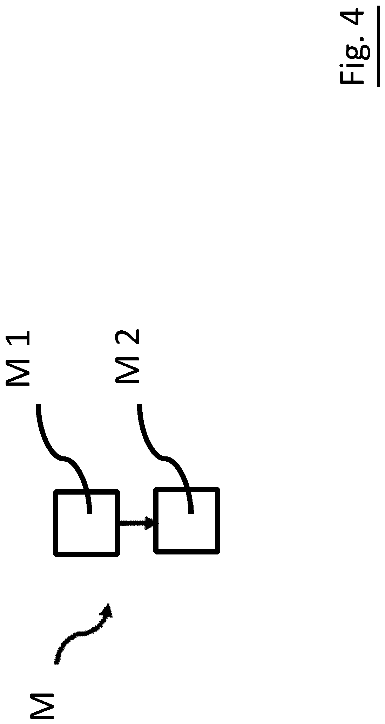

Fig. 4 schematically depicts a flow diagram of a method M for managing ground support equipment for an aircraft using the inventive interactive management device 1 of Fig. 1. This method M comprises under M1 providing and activating an inventive interactive management device 1 according to Fig. 1. Furthermore, the method comprises under M2 connecting external technical participants to the interactive management device 1, wherein the external technical participants comprise at least one participant from a group of ground support equipment for an aircraft.

It is conceivable that the aforementioned execution steps can also be carried out using the inventive interactive management devices 1 according to Fig. 2 or Fig. 3.

In further embodiments of the method M according to the invention, not shown in detail, further implementation steps can be provided. For example, it is conceivable that connecting of the external technical participants to the interactive management device 1 depends on a user-defined adjustable spatial proximity of the external technical participants to the interactive management device 1.

The user-defined adjustable spatial proximity can be in accordance with the vicinity of the external technical participants around a defined region in the direct neighborhood of a parked aircraft on the ground. For example, such a defined region could be located in an interval of 10 to 400 meters, preferably in an interval of 20 to 250 meters, preferably in an interval of 30 to 150 meters, circular or substantially circular around such an aircraft.

This region can be selected so that only those external technical participants can be connected who can be directly assigned to the aircraft parked on the ground for upcoming activities on the aircraft.

In a further embodiment of the method according to the invention, not shown in detail, it can be provided that the method comprises further the step of providing an application program of the interactive management device 1 to external technical devices, in particular mobile devices, so that by means of this application program at least one function of the interactive management device 1 can be controlled.

In yet another embodiment, the following additional steps may also be provided: collecting information from the connected external technical participants using the interactive management device 1, sending the information to an external network device using the interactive management device 1, proceeding the information using a computer program stored on the external network device, receiving the proceeded information from the external network device using the interactive management device 1 and providing the processed information to at least one external technical participant using the interactive management device 1.

In this respect, the method M according to the invention can be used to organize all activities related to a parked aircraft 100 during a stay on the ground. For this purpose, information can also be sent directly from the aircraft 100 to the interactive management device 1 or transmitted in general so that this information can be incorporated. For example, this information can already be used to prepare activities and tools so that valuable time on the ground can ultimately be saved.

If, for example, the values for the screws to be tightened are already known, a corresponding tool can be preset accordingly so that no additional time is required. In fact, these preparatory activities can be carried out while the aircraft 100 is already on the ground but has not yet come to a stop in its final parking position.

In connection with this scenario and with any other application scenarios, it is also conceivable that a connection is also possible between two interactive management devices 1.

Interactive management devices 1 can also be used simply as a type of range extender, so that interactive management devices 1 that are to be connected to one another can be linked across the runway in order to share valuable information as quickly as possible.

In this respect, some of the external technical participants may also be in the form of aircraft or their components.

### LIST OF REFERENCE SIGNS

- 1: interactive management device
- 2: computer unit
- 3: computer program
- 4: interactive interface
- 5: card system
- 6: card reader
- 7: mobile housing device
- 8: carrying aid
- 9: replaceable energy storage system
- 10: first connecting line
- 11: solar module
- 12: second connecting line
- 13: integration set device
- 14: larger technical device
- 15: maintenance devices
- 16: radio wave symbol
- 17: third connecting line
- 18: wall-mountable stationary box
- 19: aircraft hangar
- 20: external power supply
- 21: fourth connecting line
- 22: fifth connecting line
- 100: aircraft
- M: method
- M1- M2: method steps

## Claims

1. Interactive management device (1) for managing maintenance devices for an aircraft (100) comprising: a computer unit (2) with computer program (3) and at least one interactive interface (4) configured to connect external technical participants with the computer unit (2) with computer program (3) wherein the external technical participants comprise at least one participant from a group of maintenance devices 15, in particular from a group of ground support equipment, for an aircraft (100).

2. Interactive management device (1) according to claim 1, wherein components of the interactive management device (1) are stored in a mobile housing device (7) of the interactive management device (1) and wherein the mobile housing device (7) comprises at least one replaceable energy storage system (9).

3. Interactive management device (1) according to claim 2, wherein the mobile housing device (7) comprises at least one solar module (11) for charging the at least one replaceable energy storage system (9).

4. Interactive management device (1) according to claim 1, wherein components of the interactive management device (1) are stored in an integration set device (13) of the interactive management device (1) configured to be functional integrated into a larger technical device (14), particularly a cart device for transporting maintenance devices (15), in particular ground support equipment, for the aircraft (100), and wherein the integration set device (13) comprises at least one replaceable energy storage system (9).

5. Interactive management device (1) according to claim 1, wherein components of the interactive management device (1) are stored in a wall-mountable stationary box device of the interactive management device (1) configured to be connected to an external power supply (20).

6. Interactive management device (1) according to one of the claims 1 to 5, wherein the at least one interactive interface (1) comprises connectivity means for wired or wireless connectivity options so that an interactive connection between the external technical participants with the computer unit (2) can be realized.

7. Interactive management device (1) according to claim 6, wherein the wireless connectivity means are selected from: BLE, LoRaWAN, WLAN, 5G.

8. Interactive management device (1) according to one of the claims 1 to 7, wherein the computer unit (2) with computer program (3) is configured to connect the connected external technical participants to an external network system.

9. Interactive management device (1) according to one of the claims 1 to 8, wherein the interactive management device (1) comprises a card system (5) with at least one card reader (6) and at least one computer card with a functional program that can be inserted into the at least one card reader (6) wherein the card system (5) is configured to activate at least one function of the interactive management device (1).

10. Interactive management device (1) according to one of the claims 1 to 9,
wherein the interactive management device (1) is configured to provide an application program of the interactive management device (1) to external technical devices, in particular mobile devices, so that by means of this application program at least one function of the interactive management device (1) can be controlled.

11. Interactive management device (1) according to one of the claims 1 to 10, wherein the interactive management device (1) comprises positioning calculations means so that a relative distance between the interactive management device (1) and the respective external technical participants can be determined.

12. Method (M) for managing maintenance devices for an aircraft (100) comprising the following steps:
• providing and activating (M1) an interactive management device (1) according to claims 1 to 11;
• connecting (M2) external technical participants to the interactive management device (1), wherein the external technical participants comprise at least one participant from a group of maintenance devices 15, in particular from a group of ground support equipment, for an aircraft (100).

13. Method (M) according to claim 12, wherein connecting of the external technical participants to the interactive management device (1) depends on a user-defined adjustable spatial proximity of the external technical participants to the interactive management device (1).

14. Method (M) according to claim 12 or 13, wherein the method comprises further the step of:
• providing an application program of the interactive management device (1) to external technical devices, in particular mobile devices, so that by means of this application program at least one function of the interactive management device (1) can be controlled.

15. Method (M) according to claim 12 to 14, wherein the method comprises further the following steps:
• collecting information from the connected external technical participants using the interactive management device (1);
• sending the information to an external network device using the interactive management device (1);
• proceeding the information using a computer program stored on the external network device;
• receiving the proceeded information from the external network device using the interactive management device (1) and
• providing the processed information to at least one external technical participant using the interactive management device (1).
